# DEMANDE DE BREVET EUROPEEN

(11) **EP 0 985 437 A2**
(43) Date de publication de la demande: **15.03.2000**
(21) Numéro de dépôt: 99500118.7
(22) Date de dépôt: 14.07.1999
(51) Int. Cl.: A63G 9/00, F16B 7/04

(54) **Noeud d'assemblage pour portiques de balancoires, meubles de jardins ou autres**

(30) Priorité: 09.09.1998 ES 9802284 U
(71) Demandeur: Manufacturas Alco, S.A., 31780 Vera de Bidasoa (Navarra) (ES)
(72) Inventeur: Mariscal Ruigomez, Miguel, 31780 Vera de Bidasoa (Navarra) (ES)
(74) Mandataire: Urizar Barandiaran, Miguel Angel

(57) **Abrégé**

Noeud d'assemblage pour portiques de balançoires, meubles de jardin ou autres qui est composé d'une seule pièce, de configuration multiple qui définit plusieurs embouts formant un angle, avec des moyens de fixation par assemblage, ne tournant pas sur le composant tubulaire de la structure.

Application pour les structures de constructions légères.

## Description

Cette invention est un noeud d'assemblage pour les portiques de balançoire, meubles de jardin ou autres.

Les balançoires pour enfants et certains meubles de jardin sont composés d'un portique où sont disposés d'autres éléments. Ce portique doit être résistant.

En principe, cette structure résistante ne peut pas être démontée et le fait qu'elle soit démontable va au détriment de sa résistance.

Avec le noeud d'assemblage pour portiques de balançoires, meubles de jardin ou autres, on obtient une structure à la fois démontable et résistante.

Il est caractérisé par un élément d'une seule pièce, de configuration multiple qui définit plusieurs embouts, formant un angle entre eux, avec un moyen de fixation par assemblage, restant bloqué dans le composant tubulairc de la structure.

Il est caractérisé également par ces moyens de fixation qui sont, pour chaque embout, deux rabats superposés dont les trous respectifs se superposent et correspondent aux trous prévus dans le tube de la structure et sur l'embout, permettant d'introduire une vis serrée extérieurement par un écrou au tronc conique qui lors du serrage, resserre les rabats, bloquant l'embout et le tube.

Le trou de chaque embout correspondant à ceux des rabats est polygonal, permettant d'emboîter la vis dont le col est également polygonal.

Pour mieux comprendre l'objet de cette invention, on présente, sur les plans, une forme de réalisation pratique, avec d'éventuels changements accessoires qui ne dénaturent pas son idée de base.

La figure 1 représente un schéma général, en perspective, d'un noeud d'assemblage pour des portiques de balançoires, meubles de jardins ou autres, selon l'invention, avec tous ses composants et ses particularités, ainsi que les moyens de fixation (3) en position de montage.

La figure 2 représente une vue générale, de profil, correspondant à la figure antérieure, après le montage, et avec une coupe des tubes (2) de la structure.

Les figures 3 et 4 représentent les détails, agrandis, selon les indications (A) et (B) de la figure 2.

Voici maintenant un exemple de réalisation pratique, non limitative, de cette invention. Il y a d'autres modes de réalisation avec des variations accessoires qui ne dénaturent pas son idée de base; cette invention englobe toutes ces variations.

Il s'agit d'un noeud d'assemblage pour portiques de balançoires, meubles de jardin ou autres.

Conformément à l'invention, ce noeud d'assemblage est composé d'une seule pièce (1), de configuration multiple, définissant plusieurs embouts (11) formant un angle et avec des moyens de fixation (3) pour être fixés par assemblage et sans tourner sur le composant (2) de la structure.

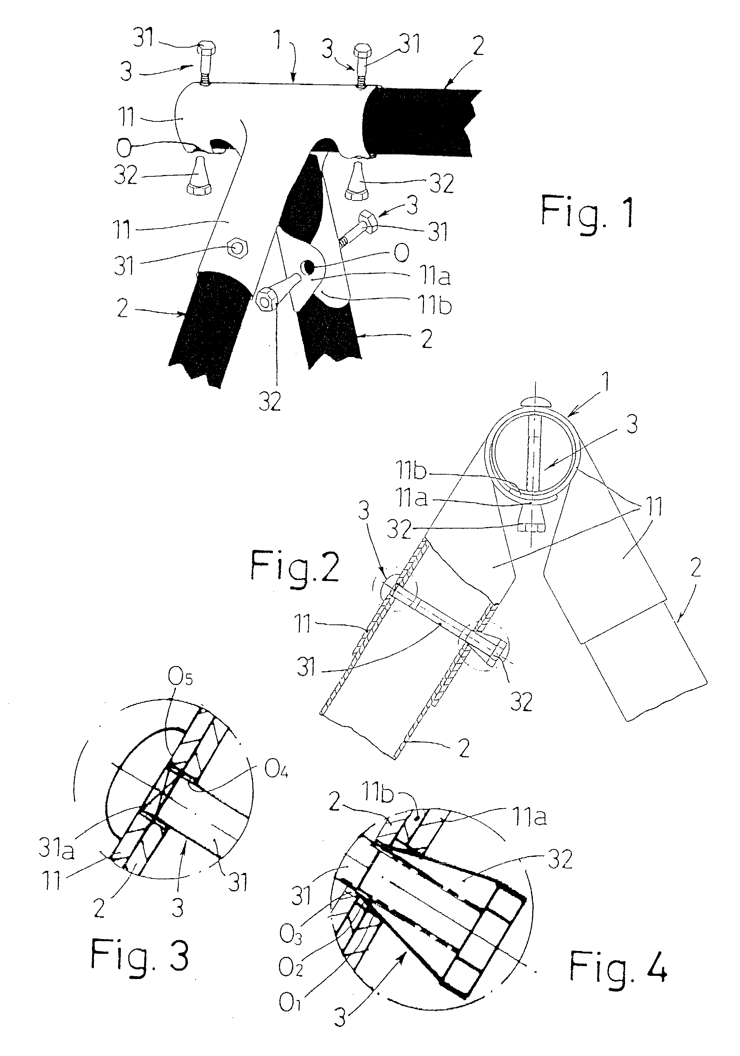

Selon la réalisation pratique représentée, les composants (2) de la structure sont tubulaires et la pièce (1) définit quatre embouts (11) formant un angle voir figure 1.- Le fait de changer le nombre d'embouts (11) et/ ou les angles de séparation n'altère pas la nature de l'invention.

Selon la réalisation représentée, la pièce (1), de configuration multiple, forme, sur chaque embout (11), deux rabats (11a) et (11b) superposés dont les trous correspondent (0₁), (0₂) entre eux- voir figure 4-

Sur chaque embout (11) et en face de ces trous (0₁) et (0₂) des rabats (11a) et (11b), il y a un autre trou (0₅). En les plaçant en position coaxiale, sur les composants tubulaires (2), il y a des trous (0₃), (0₄) dont le diamètre correspond.

Les moyens de fixation (3) de l'ensemble ainsi décrit, pour la réalisation représentée, sont une vis (31) et un écrou (32). La vis (31) a un col polygonal (31a), correspondant au trou (0₅) qui est aussi de forme polygonale pour garantir un assemblage définitif qui ne tournera pas.

L'écrou (32) a un tronc conique sur son périmètre extérieur d'attaque.

Avec cette structure, une fois le composant tubulaire (2) introduit dans l'embout correspondant (11) de la pièce (1) de façon à ce que tous les trous (0₁), (0₂), (0₃), (0₄), (0₅) correspondent, le tube (2) est pris dans les rabats (11a) et (11b); on introduit la vis (31) qui s'emboîte dans ces trous sans tourner, puis l'écrou (32) dont la forme conique provoque le resserrage des rabats (11a) et (11b), bloquant le tube (2) pour obtenir une fixation à la fois radiale et axiale.

## Revendications

1. Noeud d'assemblage pour portiques de balançoires, meubles de jardin ou autres caractérisé par un élément d'une seule pièce, de configuration multiple définissant plusieurs embouts formant un angle entre eux et fixés par des moyens définitifs qui ne tournent pas sur le composant tubulaire de la structure.

2. Noeud d'assemblage pour portiques de balançoires, meubles de jardin ou autres, selon exigences antérieures, caractérisé par ces moyens de fixation qui sont, sur chaque embout, deux rabats superposés dont les trous respectifs correspondent, correspondant, à leur tour, aux trous du tube de la structure et du propre embout, y introduisant dans tous, une vis serrée par un écrou au tronc conique qui lors du serrage, serre les rabats, bloquant l'embout et le tube.

3. Noeud d'assemblage pour portiques de balançoires, meubles de jardin ou autres, selon les exigences antérieures, caractérisé par le trou de chaque embout, concordant avec ceux des rabats, qui est polygonal, bloquant ainsi le col de la vis qui à cet effet, est également polygonal.
